Europäisches Patentamt

European Patent Office

Office européen des brevets

(19)

(11) **EP 1 192 432 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(21) Anmeldenummer: **01942968.7**

(22) Anmeldetag: **24.04.2001**

(51) Int Cl.[7]: **G01J 3/46**

(86) Internationale Anmeldenummer:
**PCT/DE2001/001568**

(87) Internationale Veröffentlichungsnummer:
**WO 2001/086242 (15.11.2001 Gazette 2001/46)**

(54) **3 D GITTEROPTISCHER SENSOR MIT STREUSCHEIBE ZUR FARBMESSUNG MIT FARBKONSTANZLEISTUNG**

3D GRATING OPTICAL SENSOR COMPRISING A DIFFUSION GLASS FOR CONDUCTING CHROMATOMETRY WITH COLOR CONSTANCY PERFORMANCE

CAPTEUR A RESEAU OPTIQUE 3D COMPORTANT UN VERRE DIFFUSANT DESTINE A LA CHROMATOMETRIE AVEC CAPACITE DE CONSTANCE CHROMATIQUE

(84) Benannte Vertragsstaaten:
**AT BE CH CY DE DK ES FI FR GB GR IE IT LI LU MC NL PT SE TR**

(30) Priorität: **08.05.2000 DE 10022349**
**05.04.2001 DE 10116996**

(43) Veröffentlichungstag der Anmeldung:
**03.04.2002 Patentblatt 2002/14**

(73) Patentinhaber: **Lauinger, Norbert**
**35578 Wetzlar (DE)**

(72) Erfinder: **Lauinger, Norbert**
**35578 Wetzlar (DE)**

(74) Vertreter: **Stamer, Harald, Dipl.-Phys.**
**Jahnstrasse 7**
**35579 Wetzlar (DE)**

(56) Entgegenhaltungen:
**EP-A- 0 753 725**　　**WO-A-97/22849**
**US-A- 3 874 799**　　**US-A- 4 029 419**
**US-A- 4 965 663**　　**US-A- 5 771 312**

EP 1 192 432 B1

**Beschreibung**

Die Erfindung betrifft einen gitteroptischen Sensor mit den Merkmalen des Oberbegriffs des Anspruchs 1. Sie betrifft auch ein entsprechendes Verfahren, Anspruch 15.

Ein solcher Sensor ist aus WO 97/22 849 bekannt. Er ist zur genauen Bestimmung von räumlichen und/oder zeitlichen Abständen in fokussierten Bildfolgen eines Linsen-Pupillen-Systems und/oder von räumlichen und/oder zeitlichen Objektparametem in Echtzeit, wie z.B. der Geschwindigkeit oder Tiefe, vorgesehen. Auf der Grundlage eines 3D-Gitters wurden auch schon Modellrechnungen zur invertierten Retina des menschlichen Auges durchgeführt und mit aus dem menschlichen Sehen bekannten subjektiven Phänomenen in Beziehung gesetzt. In der bevorzugten Form hat das 3D-Gitter eine hexagonale Struktur. Andere Strukturen mit zentrosymmetrischen Beugungsbildem sind jedoch ebenso möglich.

Seit den Untersuchungen von O. Lummer und der industriellen Entwicklung von tageslichtähnlichen Beleuchtungskörpern liegt die Erfahrung vor, daß zwischen Sonnenlicht und menschlichem Sehen eine bisher unerklärte Resonanz besteht. Hieraus resultierten alle bisherigen Empfehlungen, das Spektrum der künstlichen Lichtquellen dem Sonnenlichtspektrum anzunähem. Insbesondere treten bei der Farbwahrnehmung im photopischen Tagessehen beim Wechsel von Beleuchtungen mit unterschiedlicher spektraler Zusammensetzung der Strahlung Verschiebungen der Farbwerte auf, die adaptiv im menschlichen Sehen nach kürzerer oder z.T. längerer Zeit durch näherungsweise Farbkonstanz-Leistungen des Auges ausgeglichen werden. Als unvollständiges Erklärungsmodell hierfür dient derzeit das v.Kries-Modell, das die Adaptivität den Sehpigmenten der Retina zuspricht. Daneben bestehen noch unvollständigere kortikale Erklärungsmodelle anderer Autoren.

Andererseits ist vielfach dokumentiert worden, daß der photopische Sehprozeß nicht allein durch die spektralen Hellempfindlichkeiten der einzelnen Zapfen charakterisiert werden kann. Die sehr viel komplexere Arbeitsweise des Sehsinns erfordert zur Beurteilung vieler Sehaufgaben die Kenntnis der Leuchtdichteverteilung im gesamten Sehfeld. Das menschliche Sehen basiert nicht auf dem Reiz-Reaktionsverhalten einzelner Pixel. Es verrechnet die relativen Werte über das gesamte Gesichtsfeld. Neben chromatischen Adaptationseffekten beeinflußt Streuung von Licht an Augenmedien die Ausdehnung der den Farbenraum zentrierenden achromatischen Achse (Schwarz-Grau-Weiß-Achse). Es ist deshalb illusorisch zu glauben, daß Spektralphotometer, selbst wenn sie auf die Erfassung überlappender RGB-Werte ausgelegt sind, die idealen Instrumente der zukünftigen Farbmetrik und Farbbestimmungen darstellen werden. Ebenso unvollständig ist eine Farbmeßtechnik, die darauf verzichtet, jeweils die Trias Helligkeit / Farbton / Sättigung gleichzeitig und unter Bezug auf ein Ganzfeld zu bestimmen.

Der Bedarf wächst daher, in Zukunft über Farbsensoren zu verfügen, die Farbwerte unter Bezug auf die spektralen Empfindlichkeitskurven des menschlichen Sehens messen können und unter Adaptation an künstliche Beleuchtungen eine dem menschlichen Sehen entsprechende näherungsweise Farbkonstanz gewährleisten. Der Erfindung liegt die Aufgabe zugrunde, einen solchen Sensor zu schaffen.

Diese Aufgabe wird nach dem Vorrichtungsanspruch 1 und nach dem Verfahrensanspruch 15 gelöst. Vorteilhafte Weiterbildungen ergeben sich aus den Merkmalen der zugehörigen Unteransprüche.

Die Erfindung geht von der Erkenntnis aus, daß durch Einlagerung eines diffraktiven Mehrschichten- (3D-) Gitters in die Bildebene eines abbildenden Linsen-Pupillen-Systems im Nahfeld hinter dem Gitter (Fresnel-/Talbot-Raum; Fourierraum bzw. reziprokes Gitter) drei chromatische Beugungsordnungen (RGB-Tripel) mit jeweils sechs diskreten Interferenzmaxima auf zueinander konzentrischen Kreisen verfügbar werden, wie sie bei hexagonaler Gitterstruktur durch die aus der Kristalloptik bekannte v.Laue-Gleichung beschrieben werden.

Die v.Laue-Gleichung für diffraktive Raumgitter verlangt für das Zustandekommen konstruktiver Interferenzmaxima die gleichzeitige Erfüllung der drei Phasenbedingungen in der Gleichung |1|

$$(\cos\alpha - \cos\alpha^o) = h1\ \lambda/gx$$
$$(\cos\beta - \cos\beta^o) = h2\ \lambda/gy \qquad |1|$$
$$(\cos\gamma - \cos\gamma^o) = h3\ \lambda/gz$$

(h1h2h3 = Tripel ganzzahliger Beugungsordnungen; $\alpha^\circ, \beta^\circ, \gamma^\circ$ = Aperturwinkel der in das 3D-Gitter einfallenden Lichtkegel zu x,y,z; $\alpha, \beta, \gamma$ = Winkel der Beugungsordnungen zu x,y,z; $\lambda$ = Wellenlänge; gx,gy,gz = Gitterkonstante in x-,y-, z-Achsenrichtung). Legt man eine hexagonale Packung der lichtbeugenden Elemente und Gitterkonstantenmaße in μm von gx = $2\lambda111$, gy = $4\lambda111/\sqrt{3}$, gz = $4\lambda111$ zugrunde, so stellt $\lambda111$ in Gleichung |2| die mit maximaler Transmission in die 111-Beugungsordnung gebeugte Wellenlänge dar.

$$\lambda h1h2h3 = \lambda 111 = \frac{2\left(\dfrac{h1}{gx}\cos\alpha^o + \dfrac{h2}{gy}\cos\beta^o + \dfrac{h3}{gz}\cos\gamma^o\right)}{\dfrac{h1^2}{gx^2} + \dfrac{h2^2}{gy^2} + \dfrac{h3^2}{gz^2}} \qquad |2|$$

Bei senkrechtem Lichteinfall ($\alpha^\circ=\beta^\circ=90^\circ$, $\gamma=0^\circ$) resultiert im sichtbaren Spektralbereich (380-780 nm) ein Tripel chromatischer Beugungsordnungen

$\lambda 111$ (längste Wellenlänge) ROT

$\lambda 123$ (mittlere Wellenlänge) GRÜN

$\lambda 122$ (kürzere Wellenlänge) BLAU

Die spektralen Transmissionskurven, die zu je einer dieser $\lambda$max zentriert sind, besitzen Gauß'sche Form und werden in ihrer HalbwertsBreite durch die Anzahl der im 3D-Gitter vorhandenen Flächengitter in z-Richtung bestimmt. Beim Einfall von weißem Licht, d.h. in allen spektralen Komponenten energiegleichem Licht in das in die Bildebene des abbildenden Systems eingelagerte Gitter ergibt sich bei Wahl von $\lambda 111 = 559$ nm die Trichromatik der Beugungsordnungen bei

$\lambda 111$ ROT = 559 nm

$\lambda 123$ GRÜN = 537 nm

$\lambda 122$ BLAU = 447 nm

Es liegt damit eine trichromatische Stimmung des 3D-Gitters vor, die auf der resonatorischen Einstellung der Gitterkonstanten gx und gz auf ganzzahlige $\lambda 111$ beruht und in der in den RGB-Beugungsordnungen ein trichromatisches Gleichgewicht der Helligkeitswerte (Patterson-Amplituden$^2$-Gewichte) zustandekommt.

Bei adaptiver chromatischer Umstimmung des 3D-Gitters auf eine andere als eine weiße Beleuchtung bleibt die Relation der RGB-$\lambda$max (1 : 0,96 : 0,8 bzw. 25 : 24 : 20) stets erhalten. Die $\lambda 111$ als die das Tripel determinierende Resonanzwellenlänge shiftet beim Wechsel zu einer blauen Beleuchtung zu kürzeren, beim Wechsel zu einer roten Beleuchtung zu längeren $\lambda 111$-Wellenlängen. Die adaptive Shift endet mit der vollständigen Adaptation an die neue Beleuchtung, d.h. mit dem resonatorischen Auffinden eines neuen RGB-Gleichgewichts, der trichromatisch-additiven Weißnorm, die den Farbenraum neu zentriert. Der eigentliche Resonanzfaktor ist die Phasengeschwindigkeit $n\nu\lambda = c$ (n = Brechungsindex des Mediums, $\nu$ = Frequenz des Lichts, c = Lichtgeschwindigkeit).

Die Grundlage für die Farbkonstanzleistung des 3D-gitteroptischen Sensors bei Adaptation an variable Beleuchtungen bildet die folgende neue Ausgestaltung des Sensoraufbaus.

In die Pupillenebene (Aperturraum) der Abbildungsoptik werden eine Streuscheibe bzw. ein oder mehrere lichtstreuende Gitter eingelagert. Deren Funktion ist darin zu sehen, daß sie die an jedem Ort in der Pupille gleichermaßen vorliegende Information, nämlich die Summe der spektralen Intensitäten und Ortsfrequenzwerte, die von sämtlichen Gegenständen im Objektraum in die Pupille eingestrahlt werden und zur optischen Abbildung beitragen, diffus als inkohärenten Untergrund in die Bildebene streuen. Dadurch wird jedem lokalen Bildort die globale Information über das gesamte Gesichtsfeld (Ganzfeld) unterlegt, gegenüber der sich jeder lokale Bildpunkt absetzen muß, indem er sich von ihr differenziert, und zwar in Helligkeit, Farbton, Sättigung u.a..

Damit aber bleibt jede lokale Information auf dem globalen Untergrund des Ganzfeldes relativiert.

Sämtliche Linsen, Streuscheiben oder Gitter werden so ausgelegt, daß sie ausschließlich für elektromagnetische Strahlung im sichtbaren Spektrum (380-780 nm) transparent sind und somit diese eine Oktav der Wellenlängen bzw. Frequenzen mit eindeutigen Absorptionskanten abgrenzen. Diese Randbedingung ist deshalb von Bedeutung, weil damit spektrale Helligkeitswerte, die durch Variation der Beleuchtung zustande kommen könnten, an diesen Absorptionskanten abgeschnitten werden.

Im Nahfeld hinter dem diffraktiven 3D-Gitter werden die einem lokalen Bildpunkt zugeordneten RGB-Interferenzmaxima (3x6 konzentrische Maxima) derart über in ihrer spektralen Empfindlichkeit konstant auf weißes (in allen spektralen Komponenten energiegleiches) Sonnenlicht eingestellte Photoempfänger zusammengeschaltet, daß eine lokale RGB-Summe als trichromatisch-additiver Helligkeitswert mittels einer entsprechenden Auswertung gebildet werden kann. Hierdurch werden RGB-Gleich- und -Ungleichgewichte differenzierbar. RGB-Gleichgewichte entsprechen im Objektraum sichtbaren farblosen Oberflächen oder Beleuchtungen (Schwarz-Grau-Weiß-Objekten). Sind Beleuchtungen nicht sichtbar, sondern nur über farblose Gegenstände oder Oberflächen erschließbar, so werden sie in ihrer spektralen Charakteristik durch graue oder weiße Flächen, sog. Spiegel der Beleuchtungen, repräsentiert. Der Bildort mit einem RGB-Gleichgewicht, der die größte Summenhelligkeit erreicht, liefert die sog. Weiß-Norm und definiert damit die Spitze der den Farbenraum zentrierenden achromatischen Achse. Ersatzweise übernimmt der Bildort, dessen RGB-Werte sich einem Gleichgewicht am meisten nähern, diese Bereitstellung einer Weiß-Norm. Hieraus erklärt sich, daß sich die Weiß-Norm im trichromatischen Raum verlagern kann.

Diese Auslegung eines diffraktiven 3D-gitteroptischen Sensors, der trichromatische RGB-Werte in drei Beugungsordnungen bereitstellt, gewährleistet Farbkonstanz, wenn mit dem plötzlichen oder allmählichen Wechsel der Beleuchtung im Objektraum ein resonatorischer, d.h. an die spektrale Zusammensetzung der Beleuchtungen adaptiver Mechanismus im 3D-Gitter gewährleistet wird, der einer chromatischen Stimmung des 3D-Gitters entspricht. Bei einer weißen Beleuchtung, d.h. einer dem mittleren Sonnenlicht entsprechenden energiegleichen spektralen Zusammensetzung des sichtbaren Lichts sind die drei Gitterkonstanten in xyz-Achsenrichtung auf die ROT-Wellenlänge (559 nm) gestimmt, mit stehender Wellenbildung in x- und z-Achsenrichtung, d.h. Resonanz im 3D-Gitter. Damit resultieren unter den drei Gauß'schen spektralen Hellempfindlichkeitskurven der Photorezeptoren (Zapfen im menschlichen Sehen) identische Werte, d.h. RGB-Gleichgewichte. Die Weiß-Norm wird über die RGB-Summenwerte der drei Gaußkurven bestimmt, die zu den Wellenlängen 559 nm ROT / 537 nm GRÜN / 447 nm BLAU zentriert sind.

Nach einem plötzlichen oder allmählichen Wechsel der Beleuchtung findet ein chromatisch getriggerter Umbau der Gitterkonstanten im diffraktiven 3D-Gitter statt. Bei einer Verschiebung der Beleuchtung zum längerwelligen Bereich des Spektrums hin bricht die Weiß-Norm in dem noch auf 559 nm ROT gestimmten 3D-Gitter plötzlich zusammen. Greift dann der adaptive Mechanismus der Shift der Weiß-Norm in Richtung der geänderten Beleuchtung, so erreicht das Gitter bei einer chromatischen Stimmung auf z.B. 728 nm ROT ein neues RGB-Gleichgewicht. Damit ist der trichromatisch-additive Farbenraum erneut zu einer achromatischen Achse zentriert, die Farben stimmen wieder, sie werden als stimmig erlebt.

Wird dagegen die Beleuchtung zum kürzerwelligen Spektrum hin verschoben, so erreicht das Gitter z.B. bei einer chromatischen Stimmung auf 513 nm ROT ein neues RGB-Gleichgewicht.

Der adaptive Prozeß, der im Ergebnis zu einer trichromatischen Neunormierung des Farbenraums in einer veränderten Weiß-Norm führt, ist durch die bereits erläuterte v.Laue-Gleichung der Kristalloptik beschreibbar. Der eigentliche Resonanzfaktor ist die Phasengeschwindigkeit im Medium. Die spektrale Triggerung der Gitterkonstantenmaße entspricht dem TemperaturAusdehnungskoeffizienten für die ROT-Wellenlänge im RGB-Tripel. Durch dosierte IR-, also thermische Einstrahlung in das 3D-Gitter oder durch Veränderung des Innendrucks im 3D-Gitter ist es möglich, die Gitterkonstantenmaße entsprechend zu verändern. Der erfindungsgemäße Sensor kann damit die Farbkonstanzeigenschaften des menschlichen Sehsystems gewährleisten.

Ein Farbkonstanz-Sensor, der in Form eines mit dem Schwerpunkt der spektralen Komponenten einer Lichtquelle bzw. Beleuchtung resonanzfähigen 3D-Gitters bzw. Vorverarbeitungsfilters technisch dargestellt wird, hat für alle Anwendungen, in denen die Farbe von Stoffen und Materialien nach dem Farbeindruck, dem die Gesetzmäßigkeiten des menschlichen Farbensehens zugrunde liegen, erkannt, differenziert und klassifiziert werden müssen, große Bedeutung. Das gilt auch für dementsprechende Beurteilung von an die Farbtoncharakteristiken gebundene Eigenschaften sichtbarer Objekte, sei es in der optischen Bildverarbeitung generell, sei es bei Sehautomaten in der Robotik oder autonom fahrenden Fahrzeugen, ja selbst bei Blindensensoren. Gleichzeitig vermag ein solcher Sensor Farbwahrnehmungen unter künstlichen Lichtquellen vorhersehbar und meßbar zu machen. Da ein derartiges 3D-Gitter eine Transformation der physikalischen Parameter (Intensität und Wellenlänge) in die psychologischen Trias von Helligkeit, Farbton und Sättigung leistet, werden mit Hilfe des Sensors auch Helligkeits- und Sättigungswerte von Objektoberflächen kalkulierbar.

Ein Ausführungsbeispiel des erfindungsgemäßen gitteroptischen Sensors ist in der Zeichnung schematisch dargestellt und wird anhand der Figuren beschrieben. Dabei zeigen:

Fig.1     den Aufbau des Sensors,

Fig.1a    die Aufsicht auf ein zentrosymmetrisch trichromatisches Beugungsbild,

Fig.2     die Adaption an eine weiße Beleuchtung,

Fig.3     die Adaptation an eine rote Beleuchtung,

Fig.4     den Ablauf des Adaptationsvorgangs an eine rote Beleuchtung,

Fig.5     die Adaptation an eine blaue Beleuchtung und

Fig.6     den Ablauf des Adaptationsvorgangs an eine blaue Beleuchtung.

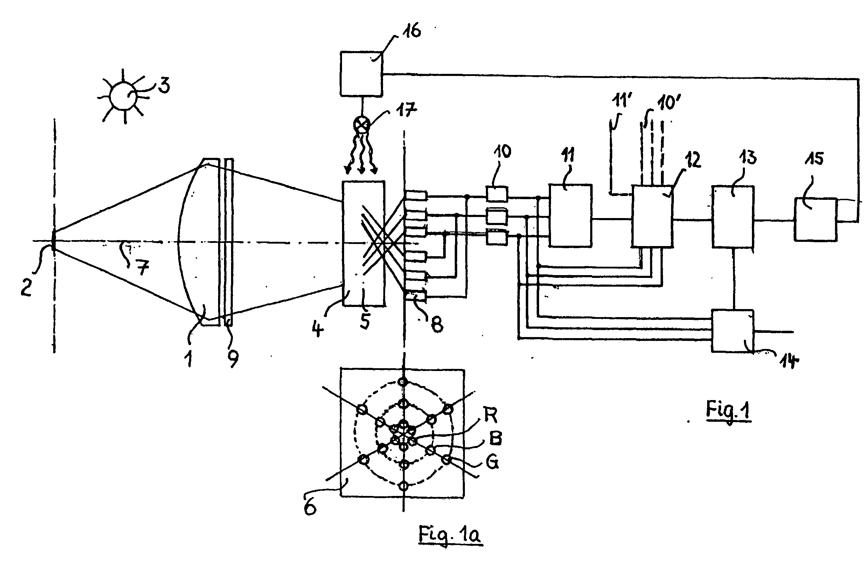

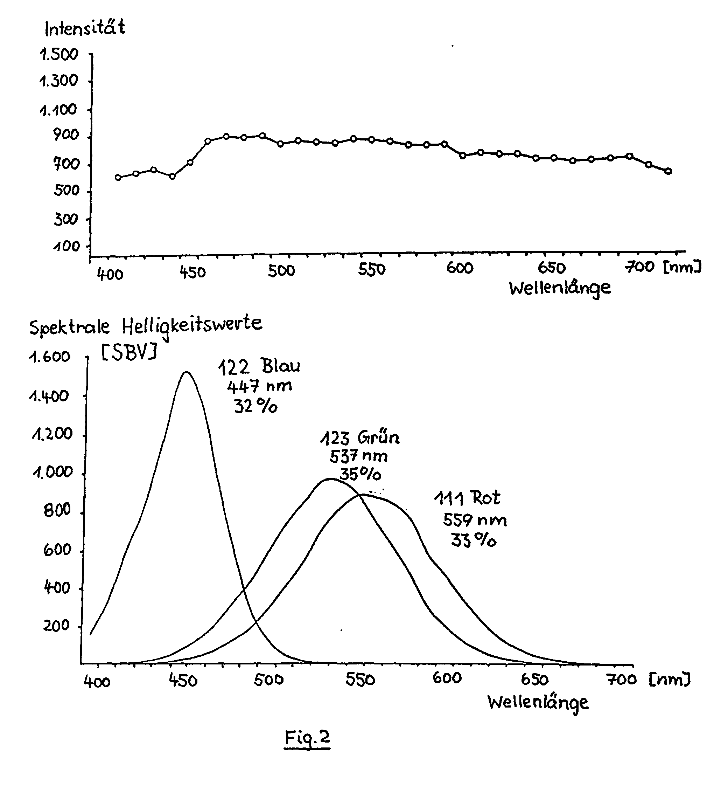

Der in Fig.1 schematisch dargestellte gitteroptische Sensor enthält als Linsen-Pupillen-System ein abbildendes Objektiv 1. Dieses bildet ein sichtbares Objekt 2, das von einer weißes Licht emittierenden Strahlungsquelle 3 beleuchtet wird, aus dem Objektraum auf ein diffraktives 3D-Gitter als Modulator 4 mit den Gitterkonstanten gx, gy, gz in der Bildebene 5 ab. Durch Beugung im hexagonalen 3D-gitteroptischen Modulator 4, Resonanz zwischen λ111 und den Gitterkonstanten sowie Interferenz im Nahfeld hinter dem Modulator 4 resultieren in bekannter Weise für jedes abgebildete Objekt 2 im sichtbaren Spektrum drei chromatische RGB-Beugungsordnungen im Beugungsbild 6 mit je sechs konzentrischen Maxima (Patterson-Gewichte). Diese sind in Fig.1a für ein auf der optischen Achse 7 des Sensors liegendes Objekt 2 in der Aufsicht nochmals dargestellt. Dabei liegen auf dem inneren Ring die rote (R), auf dem mittleren Ring die blaue (B) und auf dem äußeren Ring die grüne (G) Beugungsordnung.

Jeder Beugungsordnung ist ein fotoelektrischer Empfänger 8 zugeordnet. Alle Empfänger 8 sind auf gleiche spektrale Empfindlichkeit für eine weißes Sonnenlicht emittierende Strahlungsquelle 3 eingestellt.

Außerhalb der optischen Achse 7 liegende Objekte liefern gleiche Beugungsbilder 6, die auch ineinander verschachtelt sein können. Die Auflösung der Abbildung hängt von den Gitterkonstanten des 3D-Gitters ab. Jedem Beugungsbild ist ein bestimmtes Objekt zugeordnet.

In die Pupillenebene des Objektivs 1 oder einer dazu konjugierten Ebene ist eine Streuscheibe 9 eingefügt. Diese kann vorteilhafterweise eine beugende Gitterstruktur aufweisen. Da durch jeden Ort der Pupille Abbildungsstrahlen von allen Objekten im Objektraum hindurchlaufen, werden über jedes Streuzentrum aus der Pupillenebene heraus Bildinformationen aus dem gesamten Objektraum gleichzeitig über die Bildebene verteilt. Jedem lokalen Bild eines Objektes sind daher Informationen über das Gesamtbild überlagert. Die Streucharakteristik der Streuscheibe 9 ist so zu wählen, daß eine möglichst gleichmäßige Streuung über das gesamte Bildfeld erfolgt und eine Abbildung des lokalen Objekts auf dem durch Streuung erzeugten Hintergrund erhalten bleibt.

Die spektrale Durchlässigkeit des Objektivs 1, der Streuscheibe 9 und des Modulators 4 sind auf den sichtbaren Bereich elektromagnetischer Strahlung, insbesondere auf den Wellenlängenbereich 380 - 780 nm, begrenzt.

Alle derselben Beugungsordnung R, G, B zugeordneten Empfänger 8 eines Beugungsbildes 6 sind zur Bildung eines lokalen chromatisch-additiven Helligkeitswertes 10 zusammengeschaltet. In einem nachfolgenden Summenbildner werden daraus zusätzlich die lokalen trichromatisch-additiven Helligkeitswerte 11 erzeugt.

Die lokalen chromatisch-additiven und trichromatisch-additiven Helligkeitswerte 10, 11 des Beugungsbildes 5 und die entsprechenden Helligkeitswerte 10', 11' anderer Beugungsbilder werden einer Vergleichsanordnung 12 zur Ermittlung des Beugungsbildes mit bester Übereinstimmung der chromatisch-additiven Helligkeitswerte 10, 10'und gleichzeitig maximalem trichromatisch-additivem Helligkeitswert 11, 11' zugeführt. Die entsprechenden Helligkeitswerte des ausgewählten Beugungsbildes werden einem Weiß-Norm-Bildner 13 zur Erzeugung eines Weiß-Norm-Wertes zugeleitet. Die Übereinstimmung der drei chromatisch-additiven Helligkeitswerte bedeutet, daß es sich um ein nichtfarbiges Objektdetail handelt. Die Größe des trichromatisch-additiven Helligkeitswertes gibt eine Bewertung auf der Schwarz-Grau-Weiß-Skala an.

Die chromatisch-additiven Helligkeitswerte 10, 10' der einzelnen Beugungsbilder können auch einem Farbwert-Bildner 14 zugeführt werden. Die Summe der jeweils auf das Weiß-Norm-Signal bezogenen, z.B. mit dem Kehrwert der Weiß-Norm multiplizierten, drei unterschiedlichen chromatisch-additiven Helligkeitswerte bildet das Ausgangssignal für den lokalen Farbwert. Falls ein gemessener Weiß-Norm-Wert nicht vorliegt, kann die Farbbewertung auch durch Verhältnisbildung zu einem fiktiven Weiß-Norm-Wert (Standardwert) durchgeführt werden.

Der Prozeß der Weiß-Norm-Bildung kann permanent oder in periodischer Folge in einem Veränderungsmelder 15 überprüft werden.

Eine Veränderung der Beleuchtung führt entweder nur zu einer Änderung des trichromatisch-additiven Helligkeitswertes 11, 11' des für die Weiß-Norm ausgewählten Beugungsbildes unter Weiterbestehen eines RGB-Gleichgewichts. Der Weiß-Norm-Wert verschiebt sich dabei nur auf der den Farbenraum zentrierenden achromatischen Achse für schwarz-grau-weiß Objekte.

Führt die Veränderung der Beleuchtung jedoch auch zu einem RGB-Ungleichgewicht in dem die Weiß-Norm bestimmenden Beugungsbild, so liegt die Ursache in einer Veränderung der spektralen Zusammensetzung der Beleuchtung. Der Veränderungsmelder 15 stellt eine solche Veränderung fest und steuert einen Adapter 16, dem eine thermische Strahlungsquelle 17 zugeordnet ist. Durch Wärmestrahlung auf den Modulator 4 werden dessen Gitterkonstanten in Abhängigkeit vom thermischen Ausdehnungskoeffizienten solange verändert, bis der Weiß-Norm-Bildner 13 einen neuen Weiß-Norm-Wert anzeigt. Dieser Adaptationsprozeß entspricht einer Neigung der den Farbenraum zentrierenden achromatischen Achse.

Fig.2 stellt zunächst die Adaptation an eine weiße Beleuchtung mit näherungweise energiegleichen spektralen Komponenten dar. Die Emissionsintensität in Abhängigkeit von der Wellenlänge ist im oberen Diagramm dargestellt. Ein diffraktives hexagonales 3D-Gitter liefert dabei drei Beugungsordnungen, deren Gauß'sche spektrale Transmissionskurven zu λ111 = 559 nm (ROT), λ123 = 537 nm (GRÜN) und λ122 = 447 nm (BLAU) zentriert sind. Dies entspricht der Empfindlichkeit der Zapfen im menschlichen Tagessehen. Die im unteren Diagramm dargestellten Gauß'schen Kurven sind beschreibbar durch $a^{-1}\exp(-x^2)$ mit $x = (\lambda h1h2h3 - \lambda)/n$ und a = 0.92 bei n = 55 für 111 ROT, a = 0.88 bei n = 53 für 123GRÜN und a = 0.56 bei n = 34 für 122BLAU. Die achromatischen, d.h. grauen bis weißen, Objekte spiegeln die spektralen Eigenschaften der Beleuchtung im Objektraum wieder, insofern diese selbst unsichtbar ist. Das Produkt aus spektralen Intensitäten und spektralen Gauß-Kurven ergibt identische Helligkeitssummenwerte von je 33 % in den drei Beugungsordnungen. Ihr RGB-Gleichgewicht liefert die Weiß-Norm, die den trichromatischen Farbenraum zentriert. In der nachstehenden Tabelle sind die Werte der spektralen Helligkeitsverteilung entsprechend der den Beugungsordnungen zugeordneten Gauß'schen Kurven für den Fall einer weißen Beleuchtung zusammengestellt.

| Sichtbare Spektrum Wellenlänge (nm) | Spektrale Intensität d. Beleuchtung | Spektrale Helligkeitswerte | | | |
|---|---|---|---|---|---|
| | | 122 BLAU 447 nm | 123 GRÜN 537 nm | 111 ROT 559 nm | Summe RGB |
| 400 | 600 | 156 | 1 | | 157 |
| 410 | 625 | 337 | 2 | | 339 |
| 420 | 650 | 612 | 6 | 1 | 619 |
| 430 | 600 | 830 | 12 | 3 | 845 |
| 440 | 700 | 1195 | 29 | 7 | 1231 |
| 450 | 850 | 1508 | 67 | 18 | 1593 |
| 460 | 880 | 1364 | 124 | 37 | 1525 |
| 470 | 870 | 991 | 203 | 69 | 1263 |
| 480 | 880 | 620 | 319 | 122 | 1061 |
| 490 | 820 | 300 | 430 | 185 | 915 |
| 500 | 840 | 135 | 592 | 289 | 1016 |
| 510 | 830 | 49 | 733 | 408 | 1190 |
| 520 | 820 | 15 | 844 | 539 | 1398 |
| 530 | 850 | 4 | 951 | 700 | 1655 |
| 540 | 840 | 1 | 951 | 810 | 1762 |
| 550 | 830 | | 885 | 878 | 1763 |
| 560 | 800 | | 749 | 869 | 1618 |
| 570 | 800 | | 612 | 835 | 1447 |
| 580 | 800 | | 466 | 752 | 1218 |
| 590 | 720 | | 297 | 570 | 867 |
| 600 | 740 | | 201 | 461 | 662 |
| 610 | 730 | | 122 | 336 | 458 |
| 620 | 730 | | 70 | 232 | 302 |
| 630 | 700 | | 36 | 144 | 180 |
| 640 | 700 | | 18 | 87 | 105 |
| 650 | 680 | | 8 | 48 | 56 |
| 660 | 690 | | 3 | 26 | 29 |
| 670 | 700 | | 1 | 13 | 14 |
| 680 | 710 | | | 6 | 6 |
| 690 | 650 | | | 2 | 2 |
| 700 | 600 | | | 1 | 1 |
| Sum | 23235 | 8117 | 8732 | 8448 | 25297 |
| % | 100 | 32 | 35 | 33 | 100 |

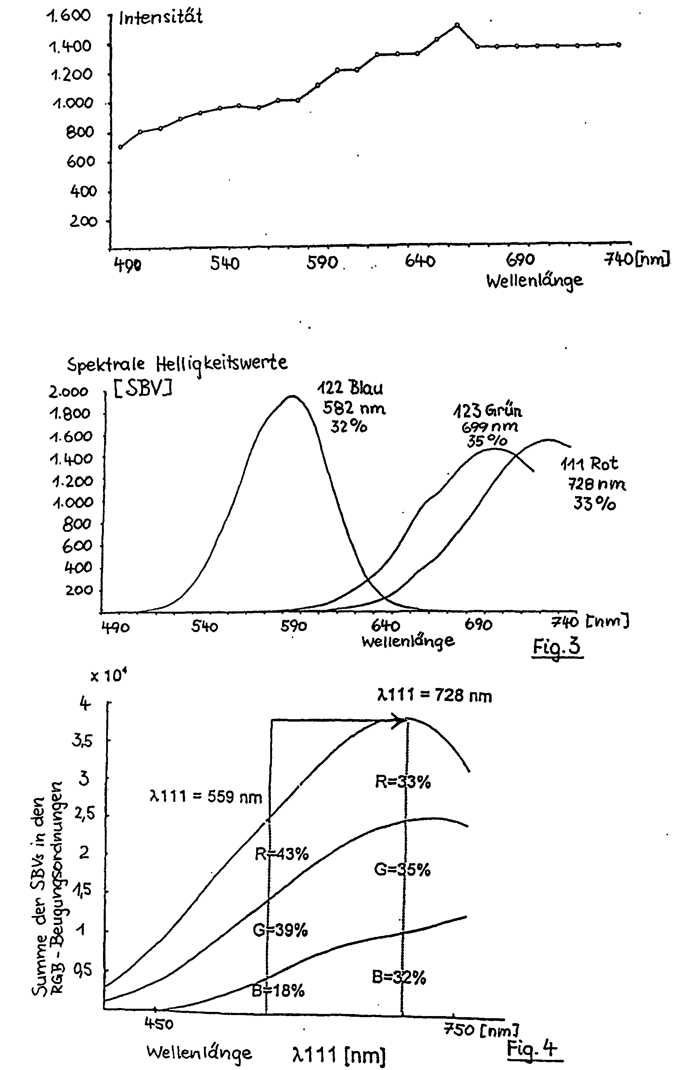

Fig.3 und Fig.4 stellen die Adaptation an eine ins Rote verschobene Beleuchtung dar. Die Emissionsintensität in Abhängigkeit von der Wellenlänge ist wiederum im oberen Bild und die der zugehörigen Gauß'schen spektralen Transmissionskurven im unteren Bild der Fig.3 dargestellt. Die 3D-gitteroptische Adaptation an eine rote Beleuchtung führt über eine chromatische Stimmung der drei Gitterkonstanten auf $\lambda 111 = 728$ nm ROT, $\lambda 123 = 699$ nm GRÜN, $\lambda 122 = 582$ nm BLAU zu einer neuen, nach dem längerwelligen Ende des Spektrum hin verschobenen trichromatischen RGB-Gleichgewichtslage, die die neue Weiß-Norm bildet. In dem Produkt aus variabler spektraler Energieverteilung im Beleuchtungslicht und konstantem Tripel der Gauß'kurven resultieren die neuen Verteilungen der spektralen Helligkeitswerte in den RGB-Beugungsordnungen, wie sie in der nachfolgenden Tabelle zusammengestellt sind.

| Sichtbare Spektrum Wellenlänge (nm) | Spektrale Intensität d. Beleuchtung Rot (T 3) | Spektrale Helligkeitswerte | | | |
|---|---|---|---|---|---|
| | | 122 BLAU 582 nm | 123 GRÜN 699 nm | 111 ROT 728 nm | Summe RGB |
| 490 | 700 | 1 | | | 1 |
| 500 | 800 | 4 | | | 4 |
| 510 | 820 | 17 | | | 17 |
| 520 | 880 | 56 | | | 56 |
| 530 | 920 | 158 | | | 158 |
| 540 | 950 | 371 | | | 371 |
| 550 | 970 | 724 | 1 | | 725 |
| 560 | 950 | 1138 | 3 | | 1141 |
| 570 | 1000 | 1619 | 5 | 1 | 1625 |
| 580 | 1000 | 1840 | 7 | 3 | 1850 |
| 590 | 1100 | 1936 | 17 | 5 | 1958 |
| 600 | 1200 | 1698 | 39 | 6 | 1743 |
| 610 | 1200 | 1149 | 77 | 13 | 1239 |
| 620 | 1300 | 707 | 151 | 31 | 889 |
| 630 | 1300 | 339 | 257 | 61 | 657 |
| 640 | 1300 | 137 | 404 | 113 | 654 |
| 650 | 1400 | 50 | 639 | 211 | 900 |
| 660 | 1500 | 16 | 935 | 367 | 1318 |
| 670 | 1350 | 3 | 1071 | 500 | 1574 |
| 680 | 1350 | 1 | 1269 | 710 | 1980 |
| 690 | 1350 | | 1402 | 943 | 2345 |
| 700 | 1350 | | 1440 | 1173 | 2613 |
| 710 | 1350 | | 1379 | 1365 | 2744 |
| 720 | 1350 | | 1230 | 1489 | 2719 |
| 730 | 1350 | | 1021 | 1519 | 2540 |
| 740 | 1350 | | 789 | 1449 | 2238 |
| 750 | 1350 | | 568 | 1295 | 1863 |
| 760 | 1350 | | 381 | 1084 | 1465 |
| Sum | 32790 | 11964 | 13085 | 12338 | 37387 |
| % | 100 | 32 | 35 | 33 | 100 |

Der in Fig.4 dargestellte resonatorische Adaptationsvorgang beginnt mit einem Ungleichgewicht in den RGB-Beugungsordnungen bei 43% R, 39% G, 18% B, das durch den plötzlichen Wechsel von der weißen zur roten Beleuchtung ausgelöst wurde. Allmählich fortschreitende 3D-gitteroptische Resonanz mit längeren $\lambda 111$-Wellenlängen führt letztendlich zu der chromatischen Gitterkonstantenstimmung auf $\lambda 111 = 728$ nm ROT und damit zu dem neuen RGB-Gleichgewicht mit 33% R, 35% G und 32% B.

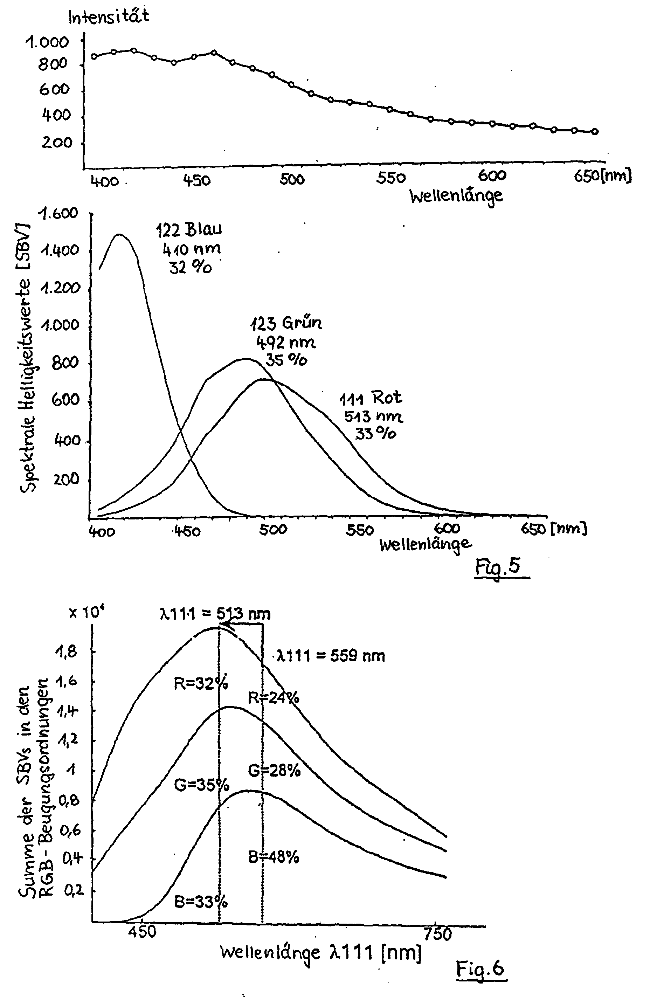

Fig.5 und Fig.6 zeigen in gleicher Weise die 3D-gitteroptische Adaptation an eine blaue Beleuchtung über eine chromatische Stimmung der drei Gitterkonstanten auf $\lambda 111 = 513$ nm ROT, $\lambda 123 = 492$ nm GRÜN, $\lambda 122 = 410$ nm BLAU zu einer neuen, nach dem kurzwelligen Ende des Spektrum hin verschobenen, trichromatischen RGB-Gleichgewichtslage, die die neue Weiß-Norm bildet. In dem Produkt aus variabler spektraler Energieverteilung im Beleuchtungslicht und konstantem Tripel der Gauß'kurven resultieren die neuen Verteilungen der spektralen Helligkeitswerte in den RGB-Beugungsordnungen, wie sie in der nachfolgenden Tabelle zusammengestellt sind.

| Sichtbare SpektrumWellenlänge (nm) | Spektrale Intensität d. BeleuchtungBlau (T 1) | Spektrale Helligkeitswerte | | | |
|---|---|---|---|---|---|
| | | 122 BLAU 410 nm | 123 GRÜN 492 nm | 111 ROT 513 nm | Summe RGB |
| 400 | 870 | 1304 | 47 | 15 | 1366 |
| 410 | 900 | 1481 | 91 | 32 | 1604 |
| 420 | 910 | 1384 | 159 | 62 | 1605 |
| 430 | 850 | 1004 | 241 | 103 | 1348 |
| 440 | 810 | 625 | 346 | 164 | 1135 |
| 450 | 850 | 360 | 509 | 271 | 1140 |
| 460 | 880 | 172 | 688 | 411 | 1271 |
| 470 | 800 | 61 | 760 | 513 | 1334 |
| 480 | 750 | 18 | 807 | 619 | 1444 |
| 490 | 700 | 5 | 795 | 695 | 1495 |
| 500 | 620 | 1 | 692 | 693 | 1386 |
| 510 | 550 | | 561 | 648 | 1209 |
| 520 | 500 | | 435 | 582 | 1017 |
| 530 | 480 | | 331 | 516 | 847 |
| 540 | 460 | | 234 | 428 | 662 |
| 550 | 420 | | 147 | 315 | 462 |
| 560 | 380 | | 85 | 216 | 301 |
| 570 | 340 | | 45 | 137 | 182 |
| 580 | 320 | | 24 | 86 | 110 |
| 590 | 310 | | 12 | 51 | 63 |
| 600 | 300 | | 5 | 29 | 34 |
| 610 | 280 | | 2 | 15 | 17 |
| 620 | 280 | | 1 | 8 | 9 |
| 630 | 250 | | | 3 | 3 |
| 640 | 240 | | | 1 | 1 |
| 650 | 230 | | | 1 | 1 |
| Summe | 14280 | 6415 | 7017 | 6614 | 20046 |
| % | 100 | 32 | 35 | 33 | 100 |

Der in Fig.6 dargestellte resonatorische Adaptationsvorgang beginnt mit einem Ungleichgewicht in den RGB-Beugungsordnungen bei 24% R, 28% G, 48% B, das durch den plötzlichen Wechsel von der weißen zur blauen Beleuchtung ausgelöst wurde. Allmählich fortschreitende 3D-gitteroptische Resonanz mit kürzeren $\lambda 111$-Wellenlängen führt letztendlich zu der chromatischen Gitterkonstantenstimmung auf $\lambda 111 = 513$ nm ROT und damit zu dem neuen RGB-Gleichgewicht 32% R, 35% G, 33% B.

Der resonatorische Adaptationsvorgang führt selbstverständlich auch zu einer geometrischen Verschiebung der Lage der Beugungsordnungen im Beugungsbild und damit in Bezug auf die fotoelektrischen Empfänger. Diese Verschiebung bleibt aber immer im Rahmen der Ausdehnung der Empfängerflächen.


**Patentansprüche**

1. Gitteroptischer Sensor zur Farbmessung mit einem einen beleuchteten Objektraum abbildenden Objektiv (1), einem diffraktiven hexagonalen 3D-gitteroptischen Modulator (4) in der Bildebene (5) des Objektivs (1), einer entsprechend den zentrosymmetrisch trichromatischen Beugungsordnungen (R,G,B) im Nahfeld hinter dem Modulator (4) angeordneten fotoelektrischen Empfängeranordnung (8) und einer Auswerteeinrichtung für die von den einzelnen Empfängern (8) erzeugten elektrischen Signale, **dadurch gekennzeichnet, daß** in der Pupillenebene des Objektivs (1) oder einer dazu konjugierten Pupillenebene mindestens eine lichtstreuende Scheibe (9) angeordnet ist.

2. Gitteroptischer Sensor nach Anspruch 1, **dadurch gekennzeichnet, daß** die lichtstreuende Scheibe (9) eine Gitterstruktur aufweist.

3. Gitteroptischer Sensor nach Anspruch 1, **dadurch gekennzeichnet, daß** die Streucharakteristik der Scheibe (9) so ausgewählt ist, daß ein Bild des Objektraumes mit gleichmäßig überlagerter Untergrundstrahlung aus dem Objektraum entsteht.

4. Gitteroptischer Sensor nach einem der Ansprüche 1 bis 3, **dadurch gekennzeichnet, daß** die spektrale Durchlässigkeit des Objektivs (1), der Streuscheibe (9) und des Modulators (4) auf den sichtbaren Bereich elektromagnetischer Strahlung begrenzt ist.

5. Gitteroptischer Sensor nach Anspruch 4, **dadurch gekennzeichnet, daß** die spektrale Durchlässigkeit auf den Wellenlängenbereich 380 - 780 nm begrenzt ist.

6. Gitteroptischer Sensor nach einem der vorhergehenden Ansprüche, **dadurch gekennzeichnet, daß** die Empfänger (8) auf gleiche spektrale Empfindlichkeit für eine weißes Licht emittierende Strahlungsquelle (3) eingestellt sind.

7. Gitteroptischer Sensor nach einem der vorhergehenden Ansprüche, **dadurch gekennzeichnet, daß** die derselben chromatischen Beugungsordnung (R,G,B) im trichromatischen Beugungsbild (6) zugeordneten Empfänger (8) zur Bildung eines lokalen chromatisch-additiven Helligkeitswertes (10, 10') zusammengeschaltet sind.

8. Gitteroptischer Sensor nach einem der vorhergehenden Ansprüche, **dadurch gekennzeichnet, daß** die Auswerteeinrichtung eine Vergleichsanordnung (12) zur Ermittlung des trichromatischen Beugungsbildes (6) mit bester Übereinstimmung der lokalen chromatisch-additiven Helligkeitswerte (10, 10') enthält.

9. Gitteroptischer Sensor nach einem der vorhergehenden Ansprüche, **dadurch gekennzeichnet, daß** die einem trichromatischen Beugungsbild (6) zugeordneten Empfänger (8) zur Bildung eines lokalen trichromatisch-additiven Helligkeitswertes (11, 11') zusammengeschaltet sind.

10. Gitteroptischer Sensor nach Anspruch 8 und 9, **dadurch gekennzeichnet, daß** die Auswerteeinrichtung einen Weiß-Norm-Bildner (13) enthält, dessen Ausgangssignal jeweils dem lokalen Beugungsbild (6) mit bester Übereinstimmung der chromatisch-additiven Helligkeitswerte (10, 10') und gleichzeitig maximalem trichromatisch-additivem Helligkeitswert (11, 11') zugeordnet ist.

11. Gitteroptischer Sensor nach Anspruch 10, **dadurch gekennzeichnet, daß** ein Adapter (16) zur Veränderung der 3D-Gitterkonstanten des Modulators (4) in Abhängigkeit von einer Veränderung der Übereinstimmung der chromatisch-additiven Helligkeitswerte (10, 10') des das Weiß-Norm-Signal bildenden Beugungsbildes (6) vorgesehen ist.

12. Gitteroptischer Sensor nach Anspruch 11, **dadurch gekennzeichnet, daß** der Adapter (16) eine auf den Modulator (4) gerichtete thermische Strahlungsquelle (17) enthält.

13. Gitteroptischer Sensor nach Anspruch 12, **dadurch gekennzeichnet, daß** dem Adapter (16) ein Regler zugeordnet ist, der die Strahlungsintensität der thermischen Strahlungsquelle (17) bei Ermittlung eines neuen Weiß-Norm-Signals konstant hält.

14. Gitteroptischer Sensor nach einem der vorhergehenden Ansprüche, **dadurch gekennzeichnet, daß** die Auswerteeinrichtung einen Farbwert-Bildner (14) enthält, dessen Ausgangssignal jeweils der Summe der auf das Weiß-Norm-Signal bezogenen lokalen chromatisch-additiven Helligkeitswerte (10, 10') eines Beugungsbildes (6) entspricht.

15. Verfahren zur Erzeugung eines Weiß-Norm-Signals mit einem gitteroptischen Sensor zur Farbmessung, der ein einen beleuchteten Objektraum abbildendes Objektiv (1), einen diffraktiven hexagonalen 3D-gitteroptischen Modulator (4) in der Bildebene (5) des Objektivs (1), eine entsprechend den zentrosymmetrisch trichromatischen Beugungsordnungen (R, G, B) im Nahfeld hinter dem Modulator (4) angeordnete fotoelektrische Empfängeranordnung (8) und eine Auswerteeinrichtung für die von den einzelnen Empfängern erzeugten elektrischen Signale aufweist, **dadurch gekennzeichnet, daß** durch diffuse Streuung in der Pupille des abbildenden Objektivs (1) oder in einer dazu konjugierten Ebene in der Bildebene eine dem Objektraum zugeordnete inkohärente Untergrundstrahlung überlagert wird und aus dem einem nicht-farbigen Teil des Objektraumes zugeordneten Beugungsbild mit gleichen chromatisch-additiven Helligkeitswerten und maximalem trichromatisch-additivem Helligkeitswert das Weiß-Norm-Signal gebildet wird.

16. Verfahren nach Anspruch 15, **dadurch gekennzeichnet, daß** bei Veränderung der Beleuchtung des Objektraumes die Gitterkonstanten des Modulators (4) durch thermische Beeinflussung solange verändert werden, bis sich im trichromatischen Beugungsbild eines nicht-farbigen Teils des Objektraumes ein neues Weiß-Norm-Signal ergibt.

17. Verfahren nach einem der Ansprüche 15 oder 16, **dadurch gekennzeichnet, daß** zur Erzeugung eines Farbwert-Signals aus dem einem farbigen Teil des Objektraumes zugeordneten Beugungsbild die Summe der auf ein Weiß-Norm-Signal bezogenen chromatisch-additiven Helligkeitswerte gebildet wird.

**Claims**

1. Grating optical sensor for conducting chromatometry comprising a lens (1) imaging an illuminated object space, a diffractive hexagonal 3D grating optical modulator (4) in the image plane (5) of the lens (1), a photoelectric receiver arrangement (8) arranged in the near field downstream of the modulator (4) in accordance with the centrosymmetrically trichromatic diffraction orders (R, G, B), and an evaluation device for the electric signals generated by the individual receivers (8), **characterized in that** at least one light-diffusion glass (9) is arranged in the pupillary plane of the lens (1) or in a pupillary plane conjugate thereto.

2. Grating optical sensor according to Claim 1, **characterized in that** the light-diffusion glass (9) has a grating structure.

3. Grating optical sensor according to Claim 1, **characterized in that** the diffusion characteristic of the glass (9) is selected so as to produce an image of the object space with uniformly superimposed background radiation from the object space.

4. Grating optical sensor according to one of Claims 1 to 3, **characterized in that** the spectral transmission of the lens (1), the diffusion glass (9) and the modulator (4) is limited to the visible region of electromagnetic radiation.

5. Grating optical sensor according to Claim 4, **characterized in that** the spectral transmission is limited to the wavelength region of 380-780 nm.

6. Grating optical sensor according to one of the preceding claims, **characterized in that** the receivers (8) are set to an identical spectral sensitivity for a radiation source (3) emitting white light.

7. Grating optical sensor according to one of the preceding claims, **characterized in that** the receivers (8) assigned to the same chromatic diffraction order (R, G, B) in the trichromatic diffraction pattern (6) are interconnected to form a local chromatically additive brightness value (10, 10').

8. Grating optical sensor according to one of the preceding claims, **characterized in that** the evaluation device includes a comparison arrangement (12) for determining the trichromatic diffraction pattern (6) with best agreement between the local chromatically additive brightness values (10, 10').

9. Grating optical sensor according to one of the preceding claims, **characterized in that** the receivers (8) assigned to a trichromatic diffraction pattern (6) are interconnected to form a local trichromatically additive brightness value (11, 11').

10. The grating optical sensor according to Claims 8 and 9, **characterized in that** the evaluation device includes a white standard forming unit (13) whose output signal is respectively assigned to the local diffraction pattern (6) with best agreement between the chromatically additive brightness values (10, 10') and a simultaneously maximum trichromatically additive brightness value (11, 11').

**11.** Grating optical sensor according to Claim 10, **characterized in that** an adapter (16) is provided for varying the 3D grating constant of the modulator (4) as a function of a variation in the agreement between the chromatically additive brightness values (10, 10') of the diffraction pattern (6) forming the white standard signal.

**12.** Grating optical sensor according to Claim 11, **characterized in that** the adapter (16) includes a thermal radiation source (17) directed toward the modulator (4).

**13.** Grating optical sensor according to Claim 12, **characterized in that** the adapter (16) is assigned a controller which keeps the radiation intensity of the thermal radiation source (17) constant during determination of a new white standard signal.

**14.** Grating optical sensor according to one of the preceding claims, **characterized in that** the evaluation device includes a colour value forming unit (14) whose output signal respectively corresponds to the sum of the local chromatically additive brightness values (10, 10'), referred to the white standard signal, of a diffraction pattern (6).

**15.** Method for generating a white standard signal, comprising a grating optical sensor for conducting chromatometry which has a lens (1) imaging an illuminated object space, a diffractive hexagonal 3D grating optical modulator (4) in the image plane (5) of the lens (1), a photoelectric receiver arrangement (8) arranged in the near field downstream of the modulator (4) in accordance with the centrosymmetrically trichromatic diffraction orders (R, G, B), and an evaluation device for the electric signals generated by the individual receivers, **characterized in that** an incoherent background radiation assigned to the object space is superimposed by diffuse scattering in the pupil of the imaging lens (1) or in a plane conjugate thereto in the image plane, and the white standard signal is formed from the diffraction pattern, assigned to a colourless part of the object space, with identical chromatically additive brightness values and a maximum trichromatically additive brightness value.

**16.** Method according to Claim 15, **characterized in that** when varying the illumination of the object space, the grating constants of the modulator (4) are varied by thermal influence until a new white standard signal is produced in the trichromatic diffraction pattern of a colourless part of the object space.

**17.** Method according to either of Claims 15 or 16, **characterized in that** the sum of the chromatically additive brightness values referred to a white standard signal is formed in order to generate a colour value signal from the diffraction pattern assigned to a coloured part of the object space.

## Revendications

**1.** Capteur à réseau optique destiné à la chromatométrie comprenant un objectif (1) représentant un espace d'objet éclairé, un modulateur (4) à réseau optique 3D hexagonal diffractif dans le plan d'image (5) de l'objectif (1), un arrangement récepteur photoélectrique (8) disposé dans le champ proche derrière le modulateur (4) conformément aux ordres de diffraction trichromatiques (R, G, B) à symétrie par rapport au centre et un dispositif d'évaluation pour les signaux électriques générés par les récepteurs (8) individuels, **caractérisé en ce qu'**au moins un disque diffuseur de lumière (9) est disposé dans le plan de la pupille de l'objectif (1) ou dans un plan de pupille conjugué avec celui-ci.

**2.** Capteur à réseau optique selon la revendication 1, **caractérisé en ce que** le disque diffuseur de lumière (9) présente une structure en réseau.

**3.** Capteur à réseau optique selon la revendication 1, **caractérisé en ce que** la caractéristique de diffusion du disque (9) est choisie de manière à produire une image de l'espace d'objet avec un rayonnement d'arrière-plan superposé de manière homogène sur l'espace d'objet.

**4.** Capteur à réseau optique selon l'une des revendications 1 à 3, **caractérisé en ce que** la perméabilité spectrale de l'objectif (1), du disque diffuseur (9) et du modulateur (4) est limitée à la plage visible du rayonnement électromagnétique.

**5.** Capteur à réseau optique selon la revendication 4, **caractérisé en ce que** la perméabilité spectrale est limitée à la plage des longueurs d'onde comprises entre 380 et 780 nm.

6. Capteur à réseau optique selon l'une des revendications précédentes, **caractérisé en ce que** les récepteurs (8) sont réglés à la même sensibilité spectrale pour une source de rayonnement (3) émettant de la lumière blanche.

7. Capteur à réseau optique selon l'une des revendications précédentes, **caractérisé en ce que** les récepteurs (8) associés au même ordre de diffraction chromatique (R, G, B) dans l'image diffractée trichromatique (6) sont interconnectés pour former une valeur de la luminosité locale chromatiquement additionnelle (10, 10').

8. Capteur à réseau optique selon l'une des revendications précédentes, **caractérisé en ce que** le dispositif d'évaluation comprend un arrangement comparateur (12) pour déterminer l'image diffractée trichromatique (6) avec une meilleure concordance des valeurs de la luminosité locales chromatiquement additionnelles (10, 10').

9. Capteur à réseau optique selon l'une des revendications précédentes, **caractérisé en ce que** les récepteurs (8) associés à une image diffractée trichromatique (6) sont interconnectés pour former une valeur de la luminosité locale trichromatiquement additionnelle (11, 11').

10. Capteur à réseau optique selon les revendications 8 et 9, **caractérisé en ce que** le dispositif d'évaluation comprend un formateur de norme de blanc (13) dont le signal de sortie est à chaque fois associé à l'image diffractée locale (6) présentant la meilleure concordance des valeurs de la luminosité chromatiquement additionnelles (10, 10') et en même temps la valeur maximale de la luminosité trichromatiquement additionnelle (11, 11').

11. Capteur à réseau optique selon la revendication 10, **caractérisé en ce qu'**il est prévu un adaptateur (16) pour modifier les constantes de réseau 3D du modulateur (4) en fonction d'une modification de la concordance des valeurs de la luminosité chromatiquement additionnelles (10, 10') de l'image diffractée (6) formant le signal de norme de blanc.

12. Capteur à réseau optique selon la revendication 11, **caractérisé en ce que** l'adaptateur (16) comprend une source de rayonnement thermique (17) dirigée sur le modulateur (4).

13. Capteur à réseau optique selon la revendication 12, **caractérisé en ce qu'**à l'adaptateur (16) est associé un régulateur qui maintient constante l'intensité du rayonnement de la source de rayonnement thermique (17) lors de la détermination d'un nouveau signal de norme de blanc.

14. Capteur à réseau optique selon l'une des revendications précédentes, **caractérisé en ce que** le dispositif d'évaluation comprend un formateur de valeur de couleur (14) dont le signal de sortie correspond à chaque fois à la somme des valeurs de la luminosité locales chromatiquement additionnelles (10, 10') d'une image diffractée (6) rapportées au signal de norme de blanc.

15. Procédé pour générer un signal de norme de blanc comprenant un capteur à réseau optique destiné à la chromatométrie, lequel présente un objectif (1) représentant un espace d'objet éclairé, un modulateur (4) à réseau optique 3D hexagonal diffractif dans le plan d'image (5) de l'objectif (1), un arrangement récepteur photoélectrique (8) disposé dans le champ proche derrière le modulateur (4) conformément aux ordres de diffraction trichromatiques (R, G, B) à symétrie par rapport au centre et un dispositif d'évaluation pour les signaux électriques générés par les récepteurs (8) individuels, **caractérisé en ce qu'**un rayonnement d'arrière-plan incohérent associé à l'espace d'objet est superposé par dispersion diffuse dans la pupille de l'objectif (1) formant l'image ou dans un plan conjugué à celui-ci dans le plan de l'image et le signal de norme de blanc est formé à partir de l'image diffractée associée à la partie non colorée de l'espace d'objet avec des valeurs de la luminosité chromatiquement additionnelles identiques et une valeur maximale de la luminosité trichromatiquement additionnelle.

16. Procédé selon la revendication 15, **caractérisé en ce qu'**en cas de modification de l'éclairage de l'espace d'objet, les constantes de réseau du modulateur (4) sont modifiées par influence thermique jusqu'à obtenir un nouveau signal de norme de blanc dans l'image diffractée trichromatique d'une partie non colorée de l'espace d'objet.

17. Procédé selon la revendication 15 ou 16, **caractérisé en ce que** la somme des valeurs de la luminosité chromatiquement additionnelles rapportés à un signal de norme de blanc est calculée à partir de l'image diffractée associée à la partie colorée de l'espace d'objet pour produire un signal de valeur de couleur.

Fig.1

Fig.1a

Fig. 2

Fig.3

Fig. 4

Fig.5

Fig.6